(19) **Europäisches Patentamt / European Patent Office / Office européen des brevets**

(11) **EP 2 042 883 B1**

(12) **EUROPEAN PATENT SPECIFICATION**

(45) Date of publication and mention
of the grant of the patent:
**20.06.2012 Bulletin 2012/25**

(51) Int Cl.:
*G01S 3/808* (2006.01)　　*G01S 5/22* (2006.01)
*F41J 5/06* (2006.01)

(21) Application number: **08004010.8**

(22) Date of filing: **24.08.2005**

(54) **Systems and methods for disambiguating shooter locations**

Systeme und Verfahren zur vereindeutigung von Schützenstandorten

Systèmes et procédés permettant de désambiguiser la position d'un tireur

(84) Designated Contracting States:
**AT BE BG CH CY CZ DE DK EE ES FI FR GB GR HU IE IS IT LI LT LU LV MC NL PL PT RO SE SI SK TR**

(30) Priority: **24.08.2004 US 925875**
**23.08.2005 US 210295**

(43) Date of publication of application:
**01.04.2009 Bulletin 2009/14**

(60) Divisional application:
**10002861.2 / 2 204 665**
**10002862.0 / 2 199 817**

(62) Document number(s) of the earlier application(s) in accordance with Art. 76 EPC:
**05857565.5 / 1 787 138**

(73) Proprietor: **Raytheon BBN Technologies Corp.**
**Cambridge, MA 02138 (US)**

(72) Inventors:
• **Mullen, Richard**
**Needham**
**MA 02494 (US)**
• **Brinn, Seth Marshall**
**Newton**
**MA 02459 (US)**
• **Milligan, Stephen D.**
**Stow**
**MA 01775 (US)**
• **Barger, James**
**Winchester**
**MA 01890 (US)**

(74) Representative: **Boyce, Conor et al**
**FRKelly**
**27 Clyde Road**
**Ballsbridge**
**Dublin 4 (IE)**

(56) References cited:
**WO-A-02/082097　　GB-A- 2 181 239**
**GB-A- 2 181 240　　US-A- 4 813 877**
**US-A- 5 781 505　　US-A- 5 930 202**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the Invention

The present invention relates to law enforcement technologies and security, and more particularly to methods and systems for determining the origin and direction of travel of supersonic projectiles. The methods and systems are capable of determining and disambiguating shooter locations even for large distances between shooter and sensor, and when no signal or only a weak signal from the muzzle sound is received.

Background of the Invention

Systems and methods are known that can determine the general direction and trajectory of supersonic projectiles, such as bullets and artillery shells by measuring parameters associated with the shockwave generated by a projectile. One such system, described in U.S. Pat. No. 5,241,518 includes at least three spaced-apart sensors, with each sensor incorporating three acoustic transducers arranged in a plane. The sensors generate signals in response to the shockwave which are related to the azimuth and elevation angle to the origin of the shockwave. Shock-wave-only measurements are unable to determine the distance between the sensor(s) and the origin of the shockwave. Distance information is typically obtained from the muzzle flash or muzzle blast.

The azimuth and elevation angle of a shooter with reference to the sensor location are typically determined by measuring Time-of-Arrival (TOA) information of the muzzle signal and shockwave signal at each sensor. Each of the sensors encounters the signals at a different time and generates a signal in response to the muzzle and shockwave pressure. The signals from the various sensors are processed, and a direction (azimuth and elevation) from the sensor (s) to the origin of the muzzle and shockwave and hence the trajectory of the projectile can be determined.

Conventional systems employ microphones, which can be relatively closely spaced (e.g., 1 meter apart) or widely dispersed (e.g., mounted on a vehicle or carried by soldiers on a battlefield), and measure muzzle and shockwave pressure omni-directionally at their respective locations. However, unless the sensors are relatively widely spaced and/or the trajectory lies within the antenna, the timing precision needed to obtain accurate shockwave-only solutions is very high, and special techniques are required.

A large antenna size can be a major disadvantage, for example, in vehicle-mounted systems. In addition, systems with an only marginal time resolution can generate ambiguous solutions in which the Time-of-Arrival information of the shockwave at a given set of sensors is nearly identical for two mirror-symmetric shooter locations.

Conventional algorithms require at least 4 shockwave and muzzle detections so that a 4x4 matrix can be inverted to map a plane wave on the shockwave TOA. Small errors in shock and muzzle TOA determination can produce substantial errors in the range estimations. Moreover, the conventional algorithms assume a constant bullet speed along the bullet trajectory, which gives inaccurate range estimates for long-range shots being fired from a distance of more than approximately 300 m.

Accordingly, there is a need for rapidly converging algorithms capable of accurately estimating a distant shooter range. There is also a need to disambiguate shock-wave only solutions for the shooter direction. There is further a need to extract muzzle signals that may be obscured by acoustic signatures unrelated to the muzzle blast.

Summary of the Invention

The invention addresses the deficiencies of the prior art by, in various embodiments, providing methods and systems for estimating shooter range for long-range shots, in particular, when muzzle signals are either weak or detected in an insufficient number of detection channels. The disclosed methods and systems also improve disambiguation of shockwave-only shooter trajectory solutions, with additional improvements achieved by including weak and/or unreliably detected muzzle sound in the optimization process.

According to one aspect the present invention provides a method for disambiguating a projectile trajectory from shockwave-only signals according to claim 1.

Advantageous embodiments may include one or more of the following features. A time-difference-of-arrival (TDOA) between the shockwave-only signals and the muzzle blast signals and an arrival angle are computed for determining the initial shooter range. A certain number of iterations may be performed, or the updated shooter range will be considered to be the final shooter range if a relationship between successively determined updated shooter ranges satisfies the convergence criterion. For example, the convergence criterion may be selected so that the difference between the successively determined updated shooter ranges or a percentage change between the successively determined updated shooter ranges is smaller than a predetermined value. To obtain real solutions, the computed bullet velocity is set to always be at least the speed of sound. The solutions are checked for consistency. For example, the updated shooter range is considered invalid if a bullet trajectory angle and an arrival angle are determined to be greater than a predetermined value.

Even if the computed shooter range is determined to be invalid, a solution may still be obtained by applying a genetic algorithm (GA). For example, an initial population of the GA with a predetermined number of individuals can be defined, where each individual is represented by a 3-tupel which includes an assumed shooter range, a missed azimuth (MA) and a missed elevation (ME) of the bullet trajectory. The GA is performed for a predefined number of generations, and residuals for the individuals in each generation are computed. In each generation the solution with the smallest residual is selected as the individual which survives unmutated. The solution having the smallest residual is selected as the updated shooter range. The solution can be refined by performing for each 3-tupel in a generation a predetermined number of iterations to compute a revised shooter range, wherein the residuals for the individuals in each generation are computed with the revised shooter range.

To prevent spurious signals from being interpreted as shockwave waveforms, a projectile trajectory can be eliminated as being false if the acoustic energy of the measured shockwave waveform has less than a predetermined threshold value over a predetermined frequency band, for example, frequencies between approximately 700 Hz and 10 kHz. Alternatively or in addition, a projectile trajectory can be eliminated as being false if a time interval where a measured shockwave waveform has a positive value is less than a minimum time or greater than a maximum time, for example, less than approximately 70 $\mu$s or greater than approximately 300 $\mu$s.

In advantageous embodiments, the total energy can be determined by integrating the measured energy over the window, preferably disregarding portions in the detected signal caused by shockwave echoes. Advantageously, the peak signal value can be determined in the window producing the maximum total energy and if the peak signal value is greater than the measured total energy in the window by a predefined ratio factor, the peak signal value can be identified as being related to the muzzle signal.

Embodiments of the invention may include one or more of the following features. The timing error distribution of the antenna and/or the acoustic sensors can be related to gain variations, sampling variations and sensor location variations of the antenna sensors. The confidence level for disambiguation depends on a size of the antenna, whereby smaller antennas require greater measurement accuracy. If two ambiguous solutions exist, the disambiguated projectile trajectory is selected based on a ratio of the residuals for two ambiguous solutions.

In other advantageous embodiments, the Time-Differences-Of Arrival (TDOA) for sensor pairs can be determined by designating a sensor that first encounters the shockwave as a reference sensor, and setting a first latch of a timing circuit when the amplitude of, for example, the initial portion of the shockwave-only signal at the reference sensor crosses a threshold value. The first latch activates start counters for each of the other sensors, with the counter in each of the other sensors running until the corresponding sensor encounters the shockwave. When one of the other sensors encounter the, for example, initial portion of the shockwave-only signal, it sets a second latch for that sensor that stops the start counter for that sensor. The TDOA values for the other sensors relative to the reference sensor are then recorded.

Further features and advantages of the present invention will be apparent from the following description of preferred embodiments and from the claims.

Brief Description of the Drawings

These and other features and advantages of the invention will be more fully understood by the following illustrative description with reference to the appended drawings, in which elements are labeled with like reference designations and which may not be to scale.

FIG. 1 shows schematically a cross-sectional view of a Mach cone intersecting with an antenna;

FIG. 2 shows schematically an exemplary sensor array with 7 omni-directional acoustic sensors;

FIG. 3 shows schematically the ambiguity inherent in shockwave-only trajectory determination;

FIG. 4 shows schematically a probability density for time difference of arrival measurements for determining the curvature of the Mach cone;

FIG. 5 shows schematically the probability of correctly disambiguating between shooter trajectories;

FIG. 6 shows a schematic diagram of a correlation process;

FIG. 7 is a process flow of a genetic algorithm used to correctly disambiguating between shooter trajectories;

FIG. 8 is a process flow for discriminating against non-shockwave signals;

FIG. 9      is a schematic diagram of a shockwave Time-of Arrival (TOA) model;

Fig. 10      shows a schematic process flow diagram for range estimation; and

Fig. 11      shows a schematic process flow diagram of a genetic algorithm for range estimation;

Detailed Description of Certain Illustrated Embodiments

As described above in summary, the invention provides, in various embodiments, methods and systems for shooter range estimation and disambiguation of projectile trajectories. These systems and method are particularly useful and advantageous, when an insufficient number of parameters required for an accurate solution are detected or when such parameters cannot be detected reliably.

Supersonic projectile trajectories are estimated solely from projectile shockwave arrival times measured by several closely spaced sensors distributed throughout a "small" measurement volume referred to as antenna. A measurement volume is considered small if the sensor spacing is 2 meters or less. Once the projectile's trajectory is identified, the location of the shooter is known except for distance back along the trajectory. This distance can be found if the antenna also obtains the arrival time of the muzzle blast sound. However, the muzzle blast is not always detectable, so that an accurate shockwave-only solution is essential for determining the trajectory.

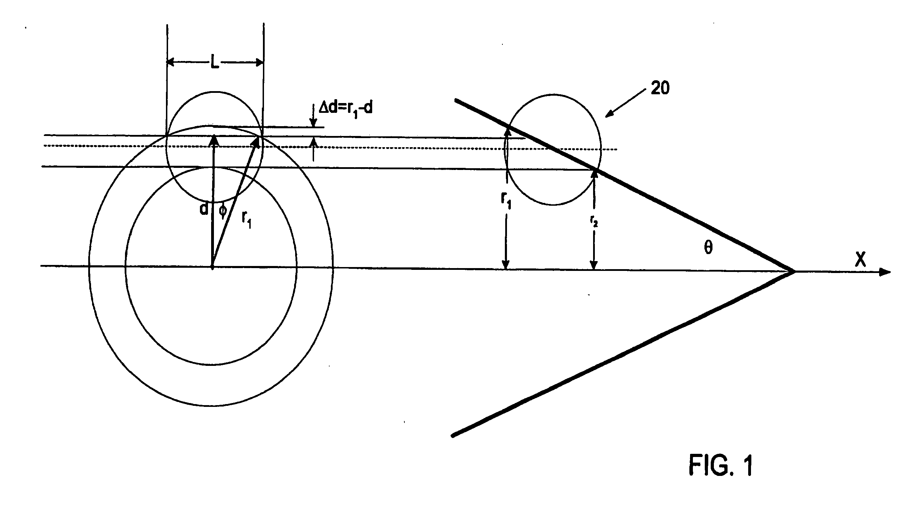

Referring now to FIG. 1, the shockwave surface is considered to be an expanding conical surface having its axis coincident with the bullet trajectory. The shockwave surface is also referred to as the Mach cone. To obtain the shockwave-only solution, three properties, the arrival angle, the radius of curvature, and the spatial gradient of the radius of curvature of the expanding conical surface are to be determined from arrival times measured at five or more antenna sensors.

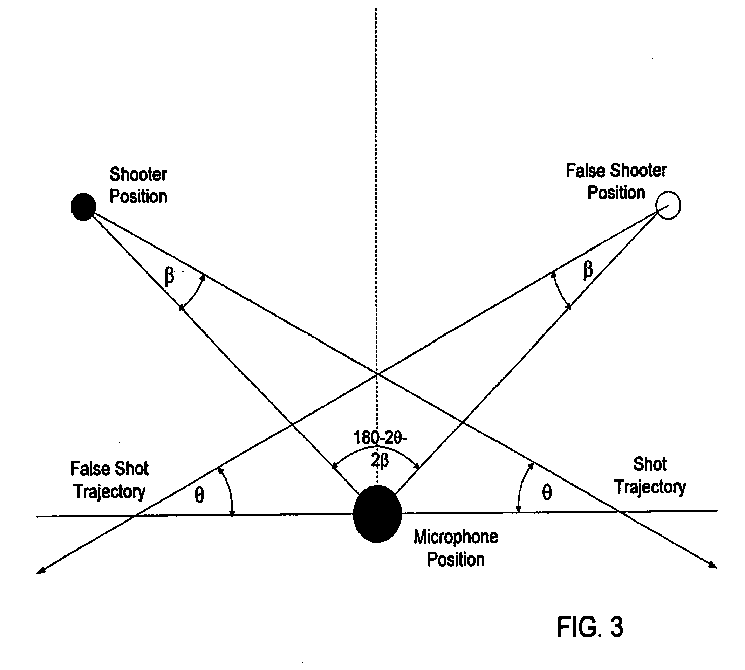

The *arrival angle* of the conical surface-generator that first reaches the antenna determines two possible relative angles (often called 'ambiguous' angles) of the bullet trajectory relative to the arrival angle at the antenna. The 'ambiguous' angles will be described in more detail below with reference to FIG. 3. The *radius of curvature* of the conical surface at the antenna determines both distance and direction to the trajectory. The *gradient of the radius of curvature* along the path of the surface-generator determines which direction the bullet is moving, thereby removing the 'ambiguity' between the two possible directions. Determining these three shockwave properties accurately and correctly decide between the two possible 'ambiguous' trajectory angles requires very precise measurements. For example, random errors should be no greater than approximately 1 $\mu$s to decide correctly between the two alternative shooter aspect angles.

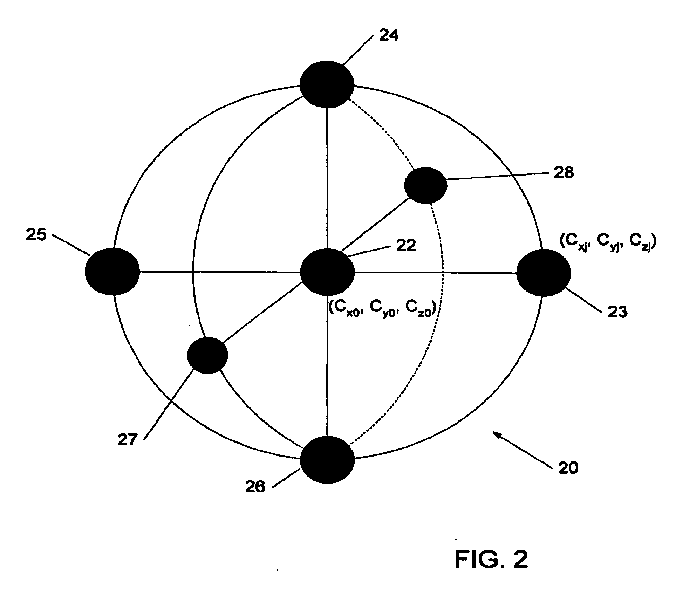

The required accuracy can be estimated by considering the propagation characteristic of the shockwave depicted in FIG. 1. Referring now also to FIG. 2, an antenna 20 includes N sensors (N=7) able to determine the arrival times of an advancing conical shockwave. Since incoming bullet trajectories can essentially be expected to originate from anywhere, the antenna elements 23 to 28 can advantageously be uniformly distributed at locations C ($C_{xj}$, $C_{yj}$, $C_{zj}$) over a spherical surface, with one element 22 located in the center at ($Cx_0$, $Cy_0$, $Cz_0$), so that a uniform sensor aperture is presented independent of the arrival angle. The time instant that the first sensor, designated as the reference sensor, detects the advancing conical surface is denoted as to. The other sensors detect the advancing conical surface at subsequent times denoted as $t_i$. The sound propagation distances in the direction of the advancing conical surface are obtained by multiplying each of the time differences by the local speed of sound c, i.e., $d_i = c \cdot (t_i - t_o)$. If there are no measurement errors, then the conical surface passing though the reference sensor is also determined by the other (N-1) sensors, with the three-dimensional coordinates of the N points ideally determining all parameters of the shockwave cone. However, as mentioned above, errors in the arrival time measurements and sensor coordinates can result in erroneous parameters for the shockwave cone and hence also of the projectile's trajectory. In the following, the time-difference of arrival precisions needed to make correct decisions about the two otherwise ambiguous trajectory angles will be described.

The system advantageously incorporates features to ensure that it will not mistake non-ballistic signals, such as vehicle noise, vibration, wind-noise and ERMI, for a shooter. For example, the sensor mast can be mounted to a vehicle (not shown) with elastomeric sleeves in mating joints to prevent rattling. The sensors can be attached to the ends of the spines with elastomeric couplings, having low-frequency resonances at about 1 Hz to isolate them from spine vibration. Sensor spines can be attached to a common hub that contains analog electronics, which can also be attached to the sensor mast with elastomeric shock mounts to isolate it from mast vibrations.

In addition, the following decision algorithm can be employed to filter out signals that lack the signatures typically found in shockwave-derived signals. All the values are parameterized, i.e., relative, and can be tuned externally. The listed values are provided only for illustration.

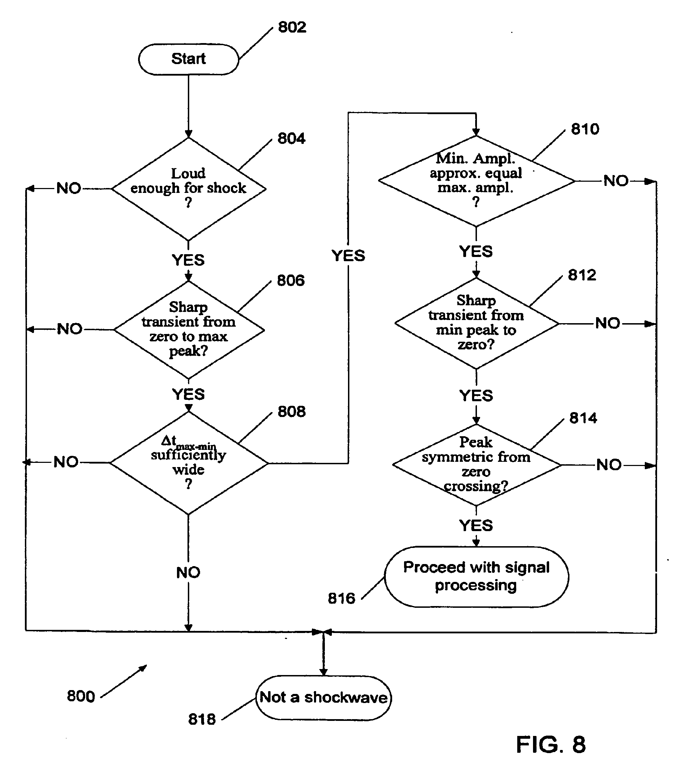

Referring now to FIG. 8, a process 800 determines if a detected signal originates from a shockwave. The process 800 starts at step 802 and checks in step 804 if the signal is a loud enough event to count as a shock, for example, does the peak signal value exceed a given parameterized threshold of, e.g., 500. If this is the case, the process 800 continues with step 806 and checks if there is a sharp transient from zero to the peak signal value, making sure that the transient to this peak value is not preceded by another signal having a significant magnitude, for example, 1/16 of the peak signal value.

If this is the case, the process 800 continues with step 808 and checks if the time between shockwave minima and maxima has a sufficiently large value, for example, 200 - 400 $\mu$s. If this is the case, the process 800 continues with step 810 and checks if the magnitudes of the minima and maxima peak signal amplitudes close, e.g. within 35% of one another. If this is the case, the process 800 continues with step 812 and checks if the pressure peak transient from the minimum peak signal to zero is sharp, using essentially the same criteria as in step 806. If this is the case, the process 800 continues with step 814 and checks if the times between the maximum signal value and the zero-crossing and between the zero-crossing and the minimum signal value are comparable, for example, within approximately 180 $\mu$s. If all steps produce an affirmative response, the process 800 decides that the signal can be a shockwave and the signal is processed, step 816. Conversely, if one of the 6 decision steps is answered in the negative, the detected signal does not originate from a shockwave, step 818.

Referring back to FIG. 1, the projectile trajectory is assumed to coincide with the x axis. The Mach angle is given by, $\theta = \arcsin(1/M)$, where M is the Mach number defined as the projectile velocity V divided by the sound velocity c. L refers to the characteristic length of the antenna. The radii of curvature of the cone at the two ends of the antenna 20 are $r_1$ and $r_2$. The end view in the left half of the picture shows how curvature $r_1$ is measured. Distance d is equal to $d = r_1 \cdot \cos(\phi)$. The angle $\phi$ is defined by $\sin(\phi) = L / 2 r_1$, so that for small angles $\phi$ one obtains $0 - L / 2 r_1$. The time difference measure of curvature between the points on the antenna surface bisecting the conical surface with radius $r_1$ is equal to $dt_1 = \Delta d / c = (r_1 - d) / c \sim r_1 \phi^2 / 2 c = L^2 / (8 \cdot r_1 . c)$. The time difference measure of curvature at $r_2 = r_1 - L \cdot \sin$ (9) is given by the same expression, with $r_2$ substituted for $r_1$. Accordingly, $dt_2 = dt_1 + L^3 \sin(\theta) / 8 r_1{}^2 c$.

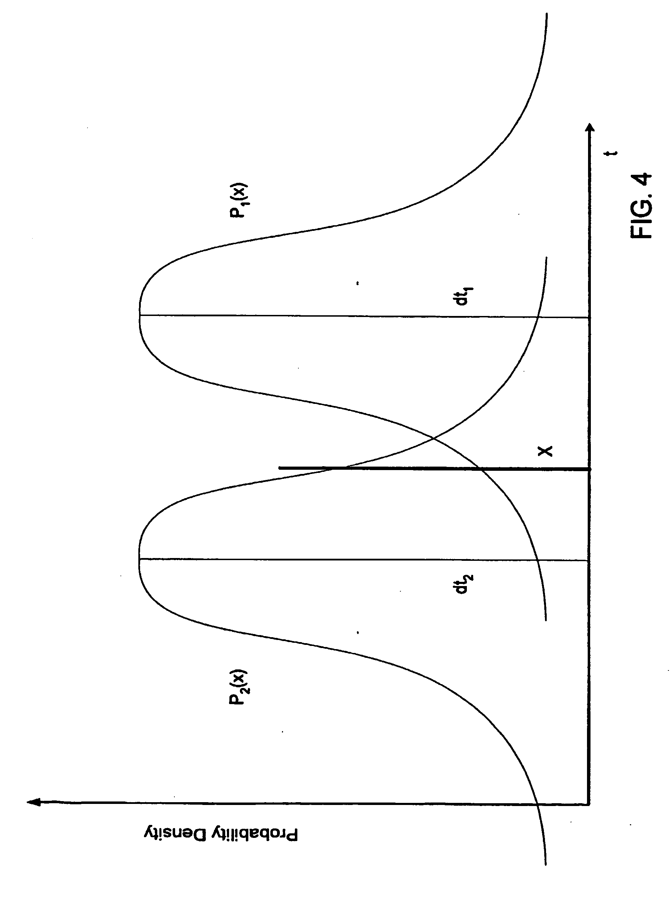

Assuming unbiased measurement errors, i.e., assuming that the measurement time differences $dt_1$ and $dt_2$ are randomly distributed values having different means $dt_1$ and $dt_2$ but the same statistically determined standard deviation $\sigma$, the mean measurement values at the two ends of the array correctly determine the local curvature there. Exemplary distributions of measurement values for the time differences $dt_1$ and $dt_2$ are shown in FIG. 4.

The sample measurement made at end 2 is shown as X. The radius of curvature at end 2 (radius $r_2$) is smaller than at end 1 (radius $r_1$). Therefore, all measurements made at end one that have values larger than X will result in the correct decision that curvature at end 1 is greater than at end 2. The probability that the correct decision is made when the measurement at end 2 is equal to X is given by:

$$P(r_1 < r_2 \mid x) = p_2(x) \int_x^\infty p_1(\xi) d\xi$$

with

$$p_2(x) = \frac{1}{\sqrt{2\pi}\sigma} e^{\frac{(x - dt_2)^2}{2\sigma^2}}$$

and

$$p_1(\xi) = \frac{1}{\sqrt{2\pi}\sigma} e^{\frac{(\xi - dt_1)^2}{2\sigma^2}}$$

Integration over x and making substitution of variables results in the following probability of making the correct decision:

$$P(r_1 < r_2) = \frac{1}{2} - \frac{1}{2\sqrt{\pi}} \int_{-\infty}^\infty e^{-u^2} erf(u - a) du$$

with

$$a = \frac{dt_1 - dt_2}{\sqrt{2}\sigma} = \frac{L^3 \sin(\theta)}{\sqrt{2}8r_1^2 c\sigma}$$

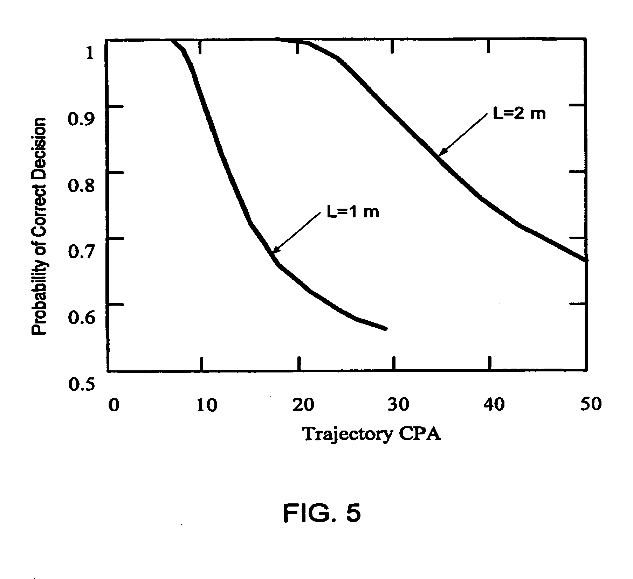

Referring now to FIG. 5, the probability of a correct decision, or confidence level for disambiguation, is plotted for two exemplary antenna sizes, L = 1m and L = 2m, against the closest point of approach (CPA) r between the projectile's trajectory and the antenna 20. The sound velocity is assumed to be c = 340 m/s. It is evident that a larger antenna has significantly expanded range for unambiguous shockwave-only solutions. For large CPA values, the difference in curvature at the two ends of the antenna ($r_1$ and $r_2$) is too small to be distinguishable, so the probability for a correct decision approaches 50 %, or complete ambiguity. Accordingly, the confidence level depends on the size, i.e. the diameter or spatial extent, of the antenna.

As mentioned above, errors arise from timing errors and sensor coordinate uncertainty. Sensor coordinate uncertainty contributes bias errors that are a highly variable function of shockwave arrival angle. However, for random arrival angles, sensor coordinate errors appear as random time difference errors.

Timing errors arise also both from gain and signal strength variations from channel to channel. Times of arrival are obtained when sensor outputs rise to a preset threshold value $V_0$. The timing error $dt$ caused by a gain variation dg depends upon the time rate of voltage increase for the channel, with $dt = \dfrac{dg}{g} \dfrac{V_0}{dV/dt}$.

Timing errors also occur when the signal strength varies over the aperture. For an aperture of length L and a cylindrical sound source at distance r, the maximum signal level variation across the aperture is equal to $p_0$ (L / 2r), where $p_0$ is the sound pressure at the aperture center. The timing error equation above applies also for this type of error, with the expression $\dfrac{L}{2r}$ replacing the relative gain variation $\dfrac{dg}{g}$. The amplitude errors are not random among sensors, but vary uniformly from a maximum across the entire aperture to zero at the center. At ranges greater than 10 m, for a 1 m aperture, the maximum amplitude factor is less than 0.05, which is less than the channel gain variation parameter of 0.2, so that effects due to amplitude errors can be ignored. Conversely, as described above, at ranges less than about 10 m the Mach cone radius is small enough with respect to the aperture length of 1 m that measurement errors are not very important.

Realistic estimates for timing errors caused by sensor uncertainty with the assumption that the magnitudes of the error vectors are statistically independent and uniformly distributed between 0 and 1 mm, and that the error angles are statistically independent, the standard deviation of equivalent uniformly distributed random time difference errors will be equal to $\dfrac{10^{-3}}{340 \bullet \sqrt{12}} = 0.85 \; \mu s$. The standard deviation of binomially distributed random time sampling errors for a system sampling at 1 MHz is equal to 0.25 $\mu$s. Timing errors due to gain variations are estimated to be approximately 0.75 $\mu$s for an exemplary system with a channel bandwidth of about 18 kHz, corresponding to a voltage rate of about 0.02 V/$\mu$s. The employed acoustic sensors for each array were chosen to have sensitivities within $\pm$ 1,5 dB. Therefore, channel relative gain variations are approximately uniformly distributed between 0.84 and 1.19, so that the standard deviation of relative gain is approximately equal to $\dfrac{1.19 - 0.84}{\sqrt{12}} = 0.10$. The threshold voltage is $V_0$ = 0.15 V, resulting in a standard deviation of timing errors of about 0.75 $\mu$s.

Total measurement timing errors are estimated by assuming that channel gain variations, sampling variations, and sensor location variations are all statistically independent. Then, the timing error standard deviation can be estimated as $\sqrt{0.85^2 + 0.75^2 + 0.25^2} = 1.1 \; \mu s$.

It is difficult and expensive to achieve such precision with analog to digital conversion, because high sampling rates followed by interpolation are needed. Two different circuits for accurately measuring the Time-Difference-of Arrival (TDOA) are employed in the disclosed system.

In one embodiment, the exemplary system uses an analog time difference of arrival (TDOA) circuit using 1 MHz clocks in each channel. The clocks are triggered when the sensor signal exceed a threshold signal level at the reference sensor, which was defined above as the sensor that first encounters the shockwave. As discussed above, a 1 MHz clock rate is sufficient to eliminate the importance of time-sample errors in practice. The system operates in an analog mode, relying on the detection of threshold levels, with the digital logic performing the following functions:

1. A first latch is set when the channel signal amplitude at the reference sensor that first encounters the shockwave crosses a threshold value.
2. The first latch sets start counters for each channel, which are incremented by one count at each clock cycle. The processor is alerted.
3. The counter in each channel runs until the corresponding sensor encounters the shockwave. This sets a second latch in the channel, which stops the count in that channel. If no second latch is set, the corresponding counter runs to an upper limit value.
4. The final number of counts in each counter is recorded in a digital TDOA register.
5. The processor reads the TDOA register.
6. The processor resets the counters for receiving the next shockwave.

In another embodiment, the correlation for each channel with every other channel is computed, for a time segment centered on the time of the hardware TDOA detection. The correlation of two functions, denoted Corr(g, h), is defined by

$$Corr(g,h) \equiv \int_{-\infty}^{+\infty} g(\tau + t)h(\tau)d\tau$$

The correlation is a function of t, which is called a "lag." It therefore lies in the time domain, and has the following property:

$$Corr(g,h) \Leftrightarrow G(f)H(-f)$$

when g and h are real functions of the time. G(f) is the Fourier transform of g(t), and H(f) is the Fourier transform of h(t).
The total power in a signal is:

$$Total\ Power \equiv \int_{-\infty}^{+\infty} |h(\tau)|^2\, d\tau = \int_{-\infty}^{+\infty} |H(f)|^2\, df$$

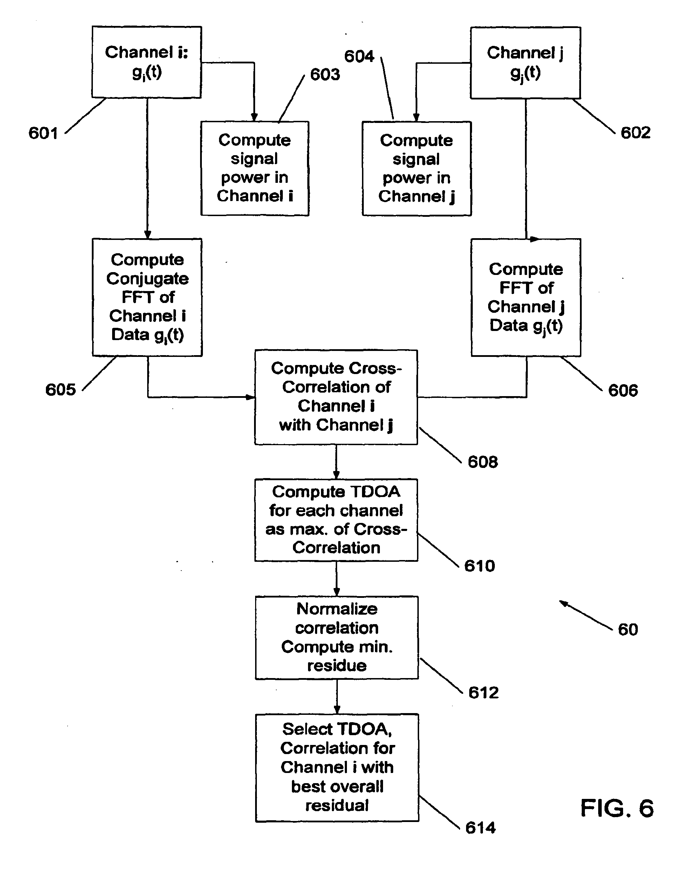

The time-of arrival signal has a finite length, so that the integration (or summation for discrete data) need only be performed over a finite time interval centered around the time-of arrival; the length of the data in one or both channels can be extended by zero-padding so that the duration of the two signals matched, as is known in the art.
In the following discussion, integrals of continuous functions are used for simplicity, although the actual data are digitized and discrete values. Those skilled in the art will easily be able to replace the integrals by a summation.
Referring now to FIG. 6, in a process 60 the shockwave signal time data $g_i(t)$, $g_j(t)$ are acquired in each channel i, j, steps 601, 602, and recorded as a function of time. In steps 603, 604, the total signal power in a channel i is computed for subsequent normalization of the correlation as

$$Total\ Power\ in\ channel\ i \equiv \int_{Signal\ duration} |g_i(\tau)|^2\, d\tau$$

The Fourier transform $G_i(f)$ of the shockwave signal time data $g_i(t)$ is computed for channel i and the conjugate $G_i(-f)$ is formed, step 605. Likewise, the Fourier transform $G_j(f)$ of the shockwave signal time data $g_j(t)$ is computed for all the other channels j, step 606. Thereafter, the cross-correlation $G_i(-f) \cdot G_j(f)$ is formed for each channel pair (i, j), step 608, which is a function $f_{i,j}(t)$ of the "lag" t. The TDOA for each channel pair is the time $t_{max}$ where f(t) has its maximum value, step 610. The correlation between the channels i and j can be defined as

$$Corr(g_i, g_j) = \frac{peak\ value\ f_{i,j}(t)}{\sqrt{(Power\ Channel\ i) * (Power\ Channel\ j)}}$$

The residual for channel i is computed by computing the mean value for a sensor i over all sensors j:

$$Re\ sidual(i) = mean(\sum_{j \ne i}(1 - Corr(g_i, g_j)))$$

as indicated in step 612. The TDOAs and correlations for that channel with the best (i.e. smallest) overall residual are then selected as the "best" solution, step 614.

As mentioned above, the channel data are typically sampled at discrete time intervals with a predefined sampling rate of, for example, 41,666.66 samples/sec. This corresponds to a bin width of 24 $\mu$s, reflecting the time resolution for the received signal. The correlation processing is done with a time resolution that is improved by a factor of 8 to 3 $\mu$s by taking 333333 samples/sec.

Once the various time differences of arrival (TDOA) between the sensors have been determined from shockwave-only signals, the shooter azimuth and elevation and the bullet trajectory can be determined. The shooter position, i.e. the distance of the shooter from the sensor array can be determined if the muzzle blast signal is known in addition.

In a Cartesian coordinate system centered at the center of the array, i.e. $\{(C_{x0}, Cy_0, C_{z0}) = (0, 0, 0)\}$, the time of arrival TOA of the shockwave at a given sensor $(C_{xj}, C_{yj}, C_{yj})$ (see FIG. 2) is given by:

$$t_{Shock} = t_0 + \frac{L}{Mc}\left(\cos(\beta) + \sqrt{M^2 - 1}\sin(\beta)\right)$$

with

$$\cos(\beta) = \frac{V_x(X_0 - C_x) + V_y(X_0 - C_y) + V_z(X_0 - Cz)}{LMc}.$$

$$V = \begin{pmatrix} V_x \\ V_y \\ V_z \end{pmatrix}$$ represents the supersonic bullet velocity $Mc = V = \sqrt{V_x^2 + V_y^2 + V_z^2}$, with c being the speed of sound and M the Mach number. $\beta$ represents the 'miss angle' between shooter position and bullet trajectory, which includes both azimuth and elevation angles. A direct hit would correspond to $\beta = 0$. The Mach angle $\theta$ is defined by $\frac{1}{M} = \sin(\Theta)$.

As mentioned above and indicated in FIG. 3, for a given shooter position and bullet trajectory, there is another shooter position and bullet trajectory for which the TOA of the shockwave at a given set of sensors is nearly identical. The two ambiguous solutions are in fact identical if in a simplified model, the shockwave is assumed to propagate across the sensor array as a plane wave. If the TDOA resolution is high enough to resolve the curvature of the shockwave, then the two nearly identical solutions can be disambiguated. The essential ambiguity of shockwave-only TDOA solutions is indicated in FIG. 3.

Assuming sufficiently accurate TOA measurements, the true solution for shooter position and bullet trajectory can be obtained by computing the shooter/trajectory combination that minimizes the root-mean-square (RMS) residual of measured and computed shockwave TDOA's:

$$\Delta \tau_{min} = \min \sqrt{\sum_j \left( \tau_{calc} - \tau_{meas} \right)^2} \; ,$$

wherein the sum is taken over all sensors.

One approach for solving this problem is the L1 Levenberg-Marquardt algorithm described in detail in US patent 5,930,202. Most classical point-by-point algorithms use a deterministic procedure for approaching the optimum solution, starting from a random guess solution and specifying a search direction based on a pre-specified transition rule, such as direct methods using an objective function and constraint values and gradient-based methods using first and second order derivatives. However, these methods have disadvantages, for example, that an optimal solution depends on the selected initial solution and that the algorithm may get "stuck" at a sub-optimal solution, such as a local minimum or where the cost function surface has a flat valley, so that further iterations will not improve the result.

It has been found that a global minimum of the shooter direction and the projectile trajectory can be computed more quickly and more reliably disambiguated by using an evolutionary genetic algorithm (GA). GAs mimic natural evolutionary principles and apply these to search and optimization procedures.

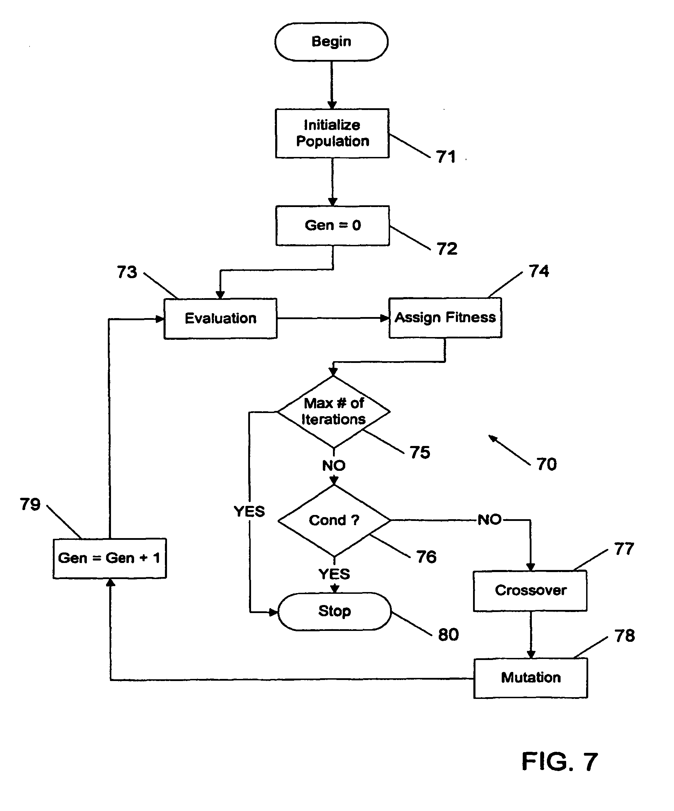

A schematic flow diagram of a GA is shown in FIG. 7. Instead of starting with a single guess for a solution, a GA process 70 begins its search by initializing a random population of solutions, step 71, and sets a generation counter to zero indicating the initial solution set, step 72. Once a random population of solutions is created, each is evaluated in the context of the nonlinear programming problem, step 73, and a fitness (relative merit) is assigned to each solution, step 74. The fitness can be represented by the Euclidean distance $\Delta\tau_{min}$ between a calculated solution and the measured solution.

$$\Delta \tau_{min} = \min \sqrt{\sum_j \left( \tau_{calc} - \tau_{meas} \right)^2}$$

Intuitively, an algorithm having a small value of $\Delta\tau_{min}$ is better.

For example, when applying the GA to disambiguate the solution for the shooter direction and projectile trajectory, the exemplary GA uses as a chromosome an initial population of 200 4-s, with each 4- containing the following values:

$$[\text{Azimuth}_{Shooter}, \text{Elevation}_{Shooter}, \text{Azimuth}_{Missed}, \text{Elevation}_{Missed}].$$

[Azimuth$_{shooter}$, Elevation$_{shooter}$] are defined by the angle $(\theta + \beta)$, while [Azimuth$_{Missed}$, Elevation$_{Missed}$] are defined by the angle $\beta$ (see FIG. 3). Since muzzle blast is not used with the aforedescribed shockwave-only approach, a nominal range between the sensor array and the shooter of 100 meter is assumed.

The initial population is created by random selection of the 4-s spanning a meaningful and reasonable range of values (all values are in degrees):

$\text{Azimuth}_{shooter} = \{0, \dots , 360\}$,

$\text{Elevation}_{shooter} = \{-10, \dots , 30\}$,

$\text{Azimuth}_{Missed} = \{-20, \dots, 20\}$, and

$\text{Elevation}_{Missed} = \{-20, \dots , 20\}$.

It is checked in step 75 if a maximum number of iterations for the GA, which can be set, for example, at 25, has been reached. If the maximum number of iterations has been reached, the process 70 stops at step 80, and the result can be either accepted or further evaluated. Otherwise, step 76 checks if preset fitness criteria have been satisfied.

Fitness criteria can be, for example, a computed missed azimuth of $<15°$ and/or a ratio of the residuals of two ambiguous solutions. If the fitness criteria are satisfied, the process 70 stops at step 80; otherwise, a new population is created through crossover, step 77, and mutation, step 78, and the generation counter is incremented by one, step 79.

In each generation, the "best" individual is allowed to survive unmutated, whereas the top 100 individuals, as judged by their fitness, also survive, but are used to create the next 100 individuals from pairs of these survivors with the crossover/mutation operators listed in Table 1.

The following exemplary crossover and mutation operators were used to demonstrate the process 70:

Table 1

| Operator Name | Operator Type | Probability | Description |
|---|---|---|---|
| Azimuth-Crossover | Crossover | 0.5 | Exchange shooter/trajectory azimuth between two chromosomes |
| Missed-Crossover | Crossover | 0.5 | Exchange missed azimuth/elevation between two chromosomes |
| Field-Mutation | Mutation | 0.3 | Replace a given field (with a probability of 0.25 per field) with a randomly selected new value within range |
| Incremental-Mutation | Mutation | 0.4 | Introduce small mutations in all fields of a chromosome (within ≤2° for shooter information; within ≤0.5° for missed information |
| Flip-Mutation | Mutation | 0.1 | Change the solution into the ambiguous alternate solution |
| No-Mutation | Mutation | 0.2 | Chromosome remains intact |

Disambiguation is achieved and/or improved by performing a gradient search on the best solution and the corresponding alternate solution. For both ambiguous solutions, the residuals and the ratios of the residuals are computed. If the computed missed azimuth is <15°, representing "close" shots and if the ratio of the residuals is >2, then the solution with the lower residual is selected. Otherwise, no actual selection is made, and the solution with the lower residual is labeled the "primary" solution, while the other solution is labeled an "alternate" solution.

With shockwave-only detection, the GA algorithm produced a solution on a 1 GHz computer running the Linux operating system in 0.15 seconds on a broad range of simulated shots. 97% of the simulated shots were within 15° of missed azimuth, and 86% of the simulated shots were within 5° of missed azimuth. Using the aforedescribed disambiguation algorithm, close shots, i.e. shots having a missed azimuth of <15°, were disambiguated 95% of the time. The disambiguation algorithm produced correct results for more distant shots 70% of the time. The accuracy of disambiguation is expected to vary based on the sensor array geometry and the presumed distribution of shots, with shots having a low elevation being easier to disambiguate.

The aforedescribed solutions for the projectile trajectory were obtained without detection of muzzle blast. However, it has been found that even a weak muzzle signal or a muzzle signal received only on a limited number of channels can be advantageously used to improve range determination and disambiguation.

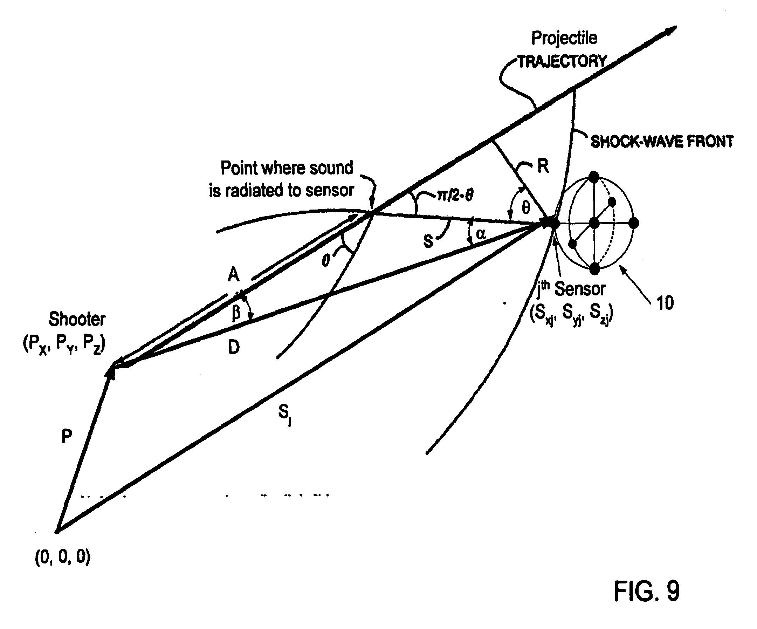

FIG. 9 shows schematically a diagram of a Time of Arrival (TOA) model, which is described in more detail in US patent 6,178,141. The TOA model can be used to estimate the trajectory of the projectile and the shooter direction relative to the sensor location. The TOA model is based on a ballistic model taking into account certain physical characteristics relating to the projectile's flight path, such as the air density (which is related to temperature); the position $\overline{P}$ ($P_x$, $P_y$, Hz) of a shooter, the azimuth and elevation angles of the rifle muzzle; the muzzle velocity of the projectile (or equivalent Mach number); and the speed of sound (which varies with temperature/air density). With this ballistic model, it is possible to accurately calculate the time at which the shockwave and muzzle blast reach a particular point in space.

As depicted in the diagram of FIG. 9, the shooter is located at point $\overline{P}$ ($P_X$, $P_Y$, $P_Z$) relative to an origin (0, 0, 0), the various sensors are located at points $S_j$ ($S_{xj}$, $S_{yj}$, $S_{zj}$), and the bullet trajectory is shown as emanating from the shooter in the direction of $\overline{A}$. The vector from the shooter to the jth sensor is $\overline{D}$, the closest point of approach (CPA) of the bullet to the jth sensor is $|\overline{R}| = |\overline{D}| \sin(\beta)$, and the path followed from the point where the shockwave is radiated from the trajectory to the jth sensor is $\overline{S}$ (the index j of the sensors has been omitted). The Mach angle of the bullet is $\theta = \sin^{-1}(1/M)$, $M = V/c_0$. M is the Mach number of the projectile, V is the supersonic velocity of the projectile, and $c_0$ is the (pressure- and temperature-dependent) speed of sound. The 'miss-angle' between trajectory and the jth sensor is $\beta$. The trajectory is characterized by its azimuth angle measured counter-clockwise from the x-axis in the x-y plane and by its elevation angle measured upward from the x-y plane. The equations that define the shockwave arrival time $t_j$ and unit vector at the jth sensor are written in terms of these geometrical quantities.

The time of arrival is equal to the time $\dfrac{|\vec{A}|}{V}$ it takes for the projectile to travel the distance $|\overline{A}|$ to the point were sound is radiated toward the j$^{th}$ sensor, plus the time it takes the shockwave to travel the distance $|\overline{S}|$ from the radiation point to the j$^{th}$ sensor, $\dfrac{|\vec{S}|}{c_0}$.

$$t_j = t_0 + \frac{|A|}{V} + \frac{|S|}{c_0} = t_0 + \frac{|D|}{c_0}\sin(\beta + \theta),$$

wherein $t_0$ is a time reference (firing time) and $c_0$ is the speed of sound. The Mach angle $\theta$ is also indicated in FIG. 9.

It can be safely assumed that the velocity V of the projectile remains constant over a distance corresponding to the sensor spacing, so that there is insignificant loss of speed between the times the projectile radiates to the different sensors. However, over longer distances projectiles are known to slow down due to air resistance. The air resistance can be expressed by a drag coefficient $C_b$ which depends on the bullet shape and bullet caliber. A mathematical ballistics model derived from physical principles can predict the arrival time of a shockwave at any general point in space as a function of a full set of parameters describing the projectile (e.g., by its drag coefficient $C_b$), its initial velocity, and the density of the surrounding air are known in advance.

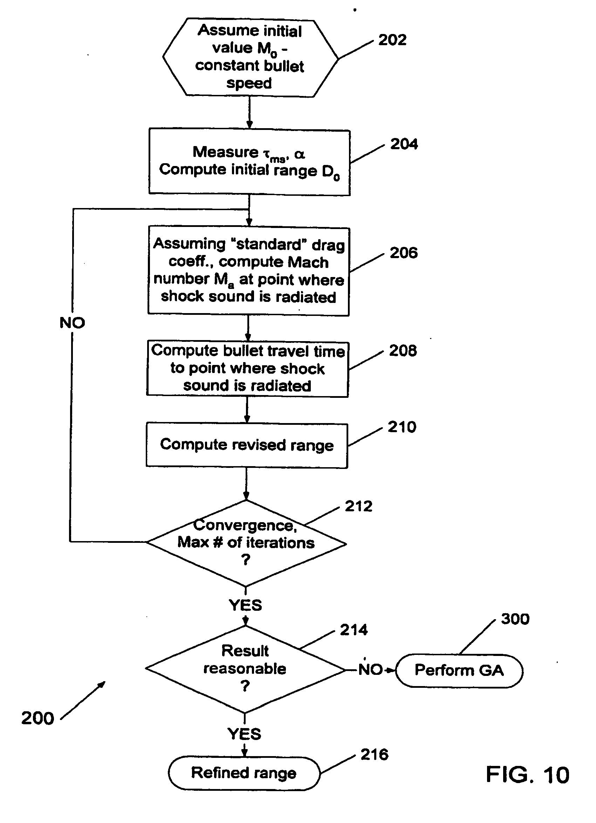

The parameters required for an exact calculation are typically not known in a realistic setting, such as a battlefield. However, range estimation can be significant improved by an iterative process shown in form of a process flow diagram 200 in FIG. 10, which takes into account deceleration of the projectile velocity along the trajectory. The process 200 begins at step 202 with the following assumptions:

$c_0$ = speed of sound modified for outside temperature/ air pressure ($\approx$340 m/s)

$C_b$ = nominal drag coefficient averaged over anticipated weapons

$V_0$ = initial velocity of the projectile, when fired, averaged over anticipated weapons

$M_0 = V_0/c$ = initial Mach number of projectile

A first estimate of the shooter distance Do is computed in step 204 using the measured time-difference-of arrival (TDOA) $T_{ms}$ and an arrival angle $\alpha$ between shock and muzzle sound at the sensor array and by assuming an initial, constant speed $V_0$ and Mach number $M_0$, according to the equation

$$D_0 = \frac{\tau_{ms} \cdot c_0}{1 - \cos(\alpha)}$$

With these assumptions, the projectile's speed at a distance a from the shooter position $\overline{P}$ can be computed in step 206 from the equation

$$M_a = M_0\left(1 - \frac{a}{C_b\sqrt{V_0}}\right)^2$$

so that the time the projectile travels the distance a along the trajectory becomes, step 208,

$$T_a = \frac{a}{V_0 - \frac{a \cdot \sqrt{V_0}}{C_b}}$$

The angle θ is related to the Mach number $M_a$ by the equation

$$\sin(\Theta) = \frac{1}{M_a}$$

wherein the Mach number $M_a$ is initially set to $M_0$. It should be noted that the instantaneous bullet velocity is set to the speed of sound (i.e., $M_a = 1$) if the computed bullet velocity becomes less than the speed of sound. The revised distance $a = |\overline{A}|$ in step 210 then becomes

$$a = D_0 \cdot \cos(\beta) \cdot \left(1 - \frac{\tan(\beta)}{\sqrt{M_a{}^2 - 1}}\right).$$

The angles α, β, and θ are related by the equation (α+ β + θ) = 90°. The process 200 then loops back to step 206 by inserting the computed value for the distance a in the equations for $M_a$ and $T_a$ above, yielding an updated Mach number $M_a$ and an updated bullet travel time $T_a$, respectively, for the traveled distance a. The measured TDOA $T_{ms}$ and the computed updated values for $T_a$ and a are then used to successively update the value D for the shooter range:

$$D = c_0 \cdot (\tau_{ms} + T_a) + s$$

This process is repeated until either a maximum number of iterations has been reached or the range values D converge, as determined in step 212.

The process 200 also checks in step 214, if the revised range value $D = |\overline{D}|$ for the distance between the shooter and the sensor array is a "reasonable" value, in which case the process 200 terminates at step 216. For example, the value for D can be considered valid if the distance a traveled by the projectile and the distance $s = a \cdot \dfrac{\sin(\beta)}{\sin(\alpha)}$ between the sensor and the point where the sound wave is radiated from the projectile to the sensor are valid number values, i.e., not a NAN. A NAN is a special floating point value representing the result of a numerical operation which cannot return a valid number value and is typically used to prevent errors from propagating through a calculation. In addition, α and β should both be less than a predetermined threshold value, indicating that the projectile was indeed fired toward the sensor array.

As mentioned above, the number pair ($T_{ms}$, α) is initially used to compute the shooter range Do in zero[th] approximation, neglecting change in the projectile's speed along the trajectory. If the iterative process 200 described above does not return a consistent geometry supporting the number pair ($T_{ms}$, α), then the solution is discarded.

Even if an exact solution may not be obtainable, it is a goal to find values for the shooter range D and the missed azimuth and elevation angles (which are related to β) that most closely match a measured shock TDOA and a measured muzzle TDOA. As already mentioned, the shock-only TDOA's between the various sensors can in most situations be reliably measured. The shooter azimuth and shooter elevation, but not the shooter range, can be determined from the shock-only TDOA's using the known sensor array coordinates ($S_{xj}$, $S_{yj}$, $S_{zj}$). It will be assumed that the TDOA $T_{ms}$ between the detected shockwave and the muzzle sound can also be measured, whereby the muzzle sound may not be detected by all the sensors.

If it is determined in step 214 that the iterative process 200 does not return a valid result, then the process 200 attempts to compute the shooter range by invoking an evolutionary genetic algorithm (GA) 300. GA's mimic natural evolutionary principles and apply these to search and optimization procedures. A GA begins its search with a random set of solutions, instead of just one solution. Once a random population of solutions is created, each is evaluated in the context of the nonlinear programming problem and a fitness (relative merit) is assigned to each solution. In one embodiment, the fitness can be represented by the Euclidean distance between a calculated solution and the measured solution, for example, by

$$\Delta \tau_{min} = \sqrt{\frac{\sum_{j=1}^{N}\left(\tau_{Shock,calc}^{j} - \tau_{Shock,meas}^{j}\right)^{2}}{N}} + abs\left(\sum_{i=1}^{N}\left(\frac{\tau_{ms,calc}^{i}}{M}\right) - \tau_{ms,meas}\right)$$

Intuitively, an algorithm producing a smaller value of $\Delta\tau_{min}$ is better.

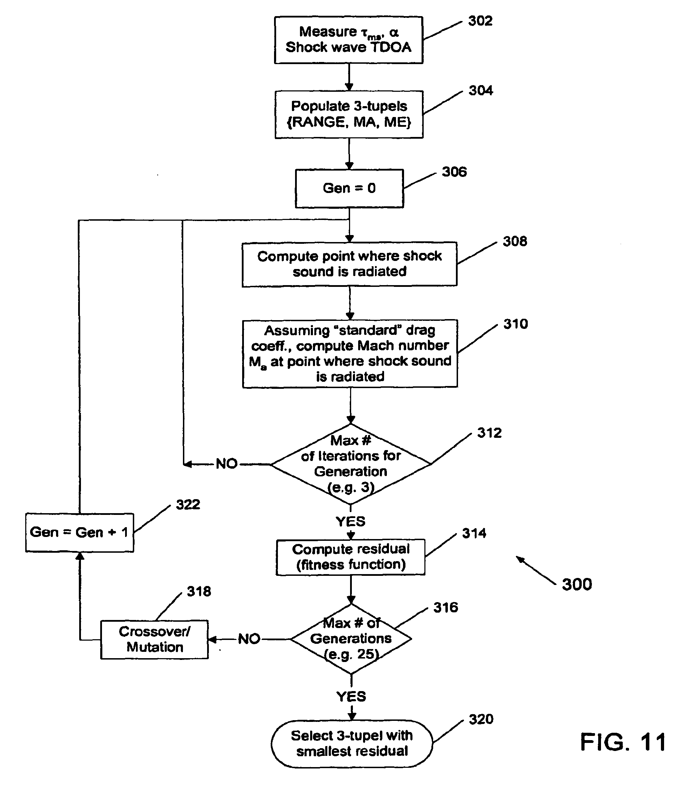

A schematic flow diagram of the GA process 300 is shown in FIG. 11. The process 300 uses the time-difference-of arrival (TDOA) $T_{ms}$ and the arrival angle $\alpha$ measured previously for process 200, step 302. An exemplary number of 3-tupes having the values {RANGE, MA, ME} is defined as an initial population, step 304, wherein RANGE is the shooter range $D = |\overline{D}|$ shown in FIG. 9, MA is the missed azimuth, and ME is the missed elevation. The MA and ME values indicate by how much the bullet missed the target in azimuth and elevation space. The target in the illustrate example is assumed to be the sensor array. The initial population in step 304 is created by random selection of the 3-tupel spanning a meaningful and reasonable range of values:

$Range_{shooter}$ = {1000, ... , 3000} [meter],

$Azimuth_{Missed}$ ={-20, ... , 20} [degrees], and

$Elevation_{Missed}$ = {-20,... , 20} [degrees].

The computation follows a similar process as outlined above for the shockwave-only solution. Initially, for generation Gen = 0, step 306, the shooter position vector $\overline{P}$ ($P_x$, $P_y$, $P_z$) is computed for each 3-tupel with the previously determined shooter azimuth and elevation, and an assumed RANGE for the particular 3-tupel. Assuming an initial Mach number $M_0$, the vector $\overline{A}$ ($A_x$, $A_y$, $A_z$), i.e. the position from where the shock sound is radiated, is computed with the MA and ME values for each 3-tupel, step 308. The distances $\overline{D} = \overline{S}_j - \overline{P}$ between the shooter and each sensor j that detects a shockwave are also computed.

For each 3-tupel, the angle $\beta$ is computed from the equation $\cos\beta = \dfrac{\vec{A}\bullet\left(\vec{P}-\vec{S}\right)}{\left|\vec{A}\right|\cdot\left|\vec{P}-\vec{S}\right|}$ ,the symbol "•" indicates the scalar product between the two vectors. Updated values for the distance a, the travel time $T_a$ of the projectile over the distance a, and the Mach number $M_a$ are computed by inserting the computed value for $\beta$ and the initially assumed values for $M_a$ = $M_0$ and a into the above equations for $M_a$, $T_a$, $\alpha$, and D, step 312. This process is iterated several times for each of the 3-tupels, for example 3 times, as determined in step 312, whereafter the residual $\Delta\tau_{min}$ defined above, which includes the muzzle signal, is computed for each 3-tupel, step 314.

It is checked in step 316 if a maximum number of iterations for the GA, for example 25 iterations, have been reached. If the maximum number of iterations has been reached, then the process 300 stops at step 320, returning the 3-tupel with the smallest residual. Otherwise, the process 300 creates a new population through a crossover and mutation operation, step 318, and the generation counter is incremented by one, step 322

In each generation, the "best" individual is allowed to survive unmutated, whereas the top 100 individuals, as judged by their fitness, also survive, but are used to create the next 100 individuals from pairs of these survivors with the crossover/mutation operators listed in Table 2 below.

The following exemplary crossover and mutation operators were used to demonstrate the process 300:

**Table 2**

| Operator Name | Operator Type | Probability | Description |
|---|---|---|---|
| Missed Azimuth-Crossover | Crossover | 0.5 | Exchange missed azimuth between two chromosomes |
| Missed- elevation Crossover | Crossover | 0.5 | Exchange missed elevation between two chromosomes |
| Missed- range Crossover | Crossover | 0.5 | Exchange range between two chromosomes |
| Field-Mutation | Mutation | 0.3 | Replace a given field (with a probability of 0.25 per field) with a randomly selected new value within range |
| Incremental-Mutation | Mutation | 0.4 | Introduce small perturbations in all fields of a chromosome (within $\pm 2$ meter for shooter range; within $\pm 0.1"$ for missed azimuth and elevation) |

The GA process 300 is executed with an initial population of 200 different 3-tupels, with a refill rate of 50, for a total of 25 generations. The GA is run 5 times in parallel with different sets of initial 3-tupels, and the solution with the smallest residual is selected as the final solution for the RANGE, missed azimuth, and missed elevation of the shooter, which allows computation of vector $\overline{D}$.

Recent experimental trials indicated a decrease of ambiguous shots from 95% to 8% on the same data set by using at least one muzzle signal channel in addition to 5 or more shockwave channels, which is a significant improvement over shockwave-only solutions.

Calculations that do not take into consideration the deceleration of the projectile along its path due to air resistance tend to overestimate range. For certain geometries and sufficiently distant shots, this overestimation may exceed 20%. The aforedescribed process removes this bias from range estimation for long-range shot detections.

As described above, ambiguous shock-wave only solutions can frequently be disambiguated by comparing the residuals from two different trajectories and selecting the trajectory with the smaller residual.

If the muzzle blast signals are detected on 4 or more sensor channels, then the aforedescribed shock-muzzle algorithms can be used to unambiguously determine the shooter location, regardless of the number of shock channels. If the muzzle blast signals are detected in fewer than 4 sensors, but shockwave signals are detected in 5 or more shockwave channels, then the aforementioned GA can be used with a modified cost function or residual, whereby whatever muzzle signals are available are "mixed" into the optimization function to disambiguate the shockwave-only solution and/or refine the estimation of the shooter range. However, if fewer than 3 muzzle channels AND fewer than 5 shockwave channels are detected, then an alert can be activated without attempting to localize the shooter.

The muzzle signal may not be reliably detected on all channels, because:

1. The detection level on one or more channels is too low to detect with confidence.

2. The muzzle energy is not discernable in the raw signal, causing the system to correlate with 'noise,' giving unreliable TDOA estimates.

3. Echoes from the shockwave can be stronger than the muzzle blast and can arrive earlier than the muzzle blast, causing the system to falsely detect shock as muzzle.

With a muzzle blast signal only detected on some channels, the residual in this situation can be defined as

$$\Delta \tau_{mn} = \sqrt{\sum_{i} \left( \Delta \tau_{muzzle,calc}^{i} - \Delta \tau_{muzzle,meas}^{i} \right)^2 + \sum_{j} \left( \Delta \tau_{Shock,calc}^{j} - \Delta \tau_{Shock,meas}^{j} \right)^2} ,$$

wherein the first term for the muzzle blast is summed over the reduced number of sensors (<4) that detect the muzzle blast, and j is summed over the sensors detecting the shockwave (typically all sensors).

As demonstrated by the examples described above, the muzzle blast signal provides important information about the shooter azimuth and hence the projectile's trajectory as compared to a shockwave-only solution, so that the computed trajectory solution aligns more closely with one of the ambiguous solutions, i.e., thus disambiguating the solutions.

Without at least some reliable muzzle signals, a significant number of ambiguous shockwave-only solutions may be generated in particular at long shooter distances, which are less desirable than a smaller number of unambiguous, but less precise solutions.

In the event of potentially unreliable muzzle detection, an attempt can still initially be made to detect muzzle signals, e.g., to find a muzzle blast signature in a noisy signal, and to compute the resulting TDOA's. The muzzle detection will be deemed to be reliable if muzzle signals are found on a sufficient number of sensor with sufficient cross-correlation between the channels, and if there is a sufficiently strong correlation between the muzzle signal and the corresponding raw band on each channel (offset by a number of bins to account for filter delays).

Otherwise, at least the muzzle signals that show insufficient correlation are erased, and the following 'coarse muzzle detection' logic is invoked:

- Look for peaks in the shock energy following a shock. Flag these peaks as likely 'shock echoes', thereby excluding them as muzzle blasts.

- Determine a maximum time it would take the muzzle wave to traverse the sensor array and define a "window" having the corresponding duration. Search for muzzle energy peaks by moving this window across substantially all detector channels following the detected shockwave, skipping sections in the detected signal which have been identified as shock echoes. Integrate the energy over the window, i.e., seek the maximum of:

$$f(i) = \sum_{n=0}^{N} \sum_{j=0}^{W} \left( mb_{i+j}^{n} \right)^{2}$$

wherein the square of represents a measure of energy, e.g., energy of the muzzle blast, measured by the $n^{th}$ sensor. (i+j) indicates the detection channel, with i denoting a discrete time interval between the time the shockwave was detected and the beginning of the window, and j represents a time interval measured from the start of the window.

To discriminate against noise, the peak energy in the window producing the maximum of function $f_{max}(i)$ is checked to determine if the energy peak at that maximum is greater than the energy across the window by a given ratio factor. If this is the case, then the signal in the window is identified as a muzzle detection, and cross-correlation is performed on all channels in the muzzle blast band mb to determine muzzle TDOA's.

The detected muzzle blast signal can then be used to determine the shooter range and/or disambiguate the shockwave signal, as described above.

In summary, the described system can accurately, quickly and often unambiguously provide shooter direction and bullet trajectory based on shockwave-only measurements. Disambiguation can be improved and shooter range can be estimated if even a weak muzzle blast waveform is also detected. The system is relatively insensitive to false shooter indications in response to vehicle vibration and noise, nor wind noise, firecrackers or nearby shooting in directions away from the system.

It should be mentioned that the system detecting the shockwave signals performs two test on the initial waveforms for determining if the signal can indeed be attributed to shockwaves. First, the measured total energy in a frequency band between approximately 700 Hz and 10 kHz is compared with an empirical threshold value. Only if this threshold value is exceeded, can the signal form be considered as arising from a shockwave. Secondly, the time span of the detected initial positive pressure peak must be greater than approximately 70 μs and less than approximately 300 μs. These criteria provide immunity of the system from impulsive noise, such as firecrackers and non-threatening gunfire. If these tests are not passed, the detected waveform is not considered a shockwave, and no shooter solution is attempted.

By way of example, although the illustrative embodiments are depicted as having acoustic sensors, such as microphones, this need not be the case. Instead, other types of pressure-sensitive mechanical or electrical sensors may be used. Moreover, the values given in Tables 1 and 2 for the various operators are intended to be examples only, and other values may be selected depending on the actual conditions in the field.

**Claims**

**1.** A method for disambiguating a projectile trajectory from shockwave-only signals, comprising:

measuring at least an initial portion of the shockwave-only signals (g(t)) at five or more spaced acoustic sensors (22-28) forming an antenna (20);

estimating a timing error distribution for the acoustic sensors;

determining, with a time resolution that is higher than the standard deviation of the estimated timing error distribution, Time-Differences-Of Arrivals, TDOA, for sensor pairs from the measured initial portion of the shockwave-only signals; and

selecting (70-80) the disambiguated projectile trajectory that minimizes the root-mean-square, RMS, residual for the TDOA of the acoustic sensors, wherein the residual ($\Delta\tau_{min}$) is a function of the differences between the calculated ($\tau_{calc}$) and measured ($\tau_{meas}$) TDOAs for the sensor pairs, by using an evolutionary genetic algorithm (GA) and a fitness criterion.

2. The method of claim 1, wherein the timing error distribution is related to gain variations, sampling variations and/or sensor location variations of the antenna sensors.

3. The method of claim 1, wherein the fitness criterion includes a computed missed azimuth angle being less than a first threshold or a ratio of the residuals of two ambiguous solutions being greater than a second threshold.

4. The method of claim 3, wherein the first threshold is 15 degrees.

5. The method of claim 3, wherein the second threshold is 2.

6. The method of claim 1, wherein the disambiguated projectile trajectory is selected from a plurality of potential solutions, the selected solution being the potential solution with the smallest residual value.

7. The method of claims 1 to 6, wherein a confidence level for disambiguation is computed, the confidence level based on a size (L) of the antenna.

8. The method of one of claims 1 to 7, wherein the disambiguated projectile trajectory is selected based on a ratio of the residuals for two ambiguous solutions.

9. The method of one of claims 1 to 8, wherein the Time-Differences-Of-Arrival, TDOA, for sensor pairs are determined by

designating a sensor that first encounters the shockwave as a reference sensor;

setting a first latch of a timing circuit when an amplitude of the initial portion of the shockwave-only signal at the reference sensor crosses a threshold value, said first latch activating start counters for each of the other sensors, with the counters in each of the other sensors running until the corresponding sensor encounters the shockwave;

when one of the other sensors encounters the initial portion of the shockwave-only signal, setting a second latch for the corresponding other sensor that stops the start counters for that other sensors; and

recording the TDOA values for the other sensors with respect to the reference sensor.

10. The method of one of claims 1 to 9, wherein a projectile trajectory is eliminated as being false if acoustic energy of the measured shockwave waveform has less than a predetermined threshold value over a predetermined frequency band.

11. The method of claim 10, wherein the predetermined frequency band comprises frequencies between approximately 700 Hz and 10 kHz.

12. The method of one of claims 1 to 11, wherein a projectile trajectory is eliminated as being false if a time interval where a measured shockwave waveform has a positive value is less than a minimum time or greater than a maximum time.

13. The method of claim 12, wherein the minimum time is approximately 70$\mu$s and the maximum time is approximately 300$\mu$s.

14. The method of one of claims 1 to 13, wherein the disambiguated projectile trajectory has a smaller value of the residual than any other computed projectile trajectory.

**Patentansprüche**

1. Verfahren zum Disambiguieren einer Geschossflugbahn aus Nur-Stoßwellen-Signalen, das Folgendes umfasst:

   Messen mindestens eines Anfangsabschnitts der Nur-Stoßwellen-Signale (g(t)) an fünf oder mehr in Abständen angeordneten Akustiksensoren (22-28), die eine Antenne (20) bilden;
   Abschätzen einer Gleichlauffehlerverteilung für die Akustiksensoren;
   Bestimmen, mit einer Zeitauflösung, die höher ist als die Standardabweichung der abgeschätzten Gleichlauffehlerverteilung, von Laufzeitdifferenzen für Sensorpaare aus dem gemessenen Anfangsabschnitt der Nur-Stoßwellen-Signale; und
   Auswählen (70-80) der disambiguierten Geschossflugbahn, die die Residualdiskrepanzwurzel für die Laufzeitdifferenz der Akustiksensoren minimiert,
   wobei es sich bei dem Residuum ($\Delta\tau_{min}$) um eine Funktion der Differenzen zwischen den berechneten ($\tau_{calc}$) und den gemessenen ($\tau_{meas}$) Laufzeitdifferenzen für die Sensorpaare handelt, durch Anwenden eines evolutionären genetischen Algorithmus (GA) und eines Eignungskriteriums.

2. Verfahren nach Anspruch 1, wobei die Gleichlauffehlerverteilung mit Verstärkungsschwankungen, Abtastschwankungen und/oder Sensorortschwankungen der Antennensensoren zusammenhängt.

3. Verfahren nach Anspruch 1, wobei das Eignungskriterium umfasst, dass ein berechneter verfehlter Azimutwinkel kleiner ist als ein erster Schwellenwert oder ein Verhältnis der Residuen von zwei mehrdeutigen Lösungen größer ist als ein zweiter Schwellenwert.

4. Verfahren nach Anspruch 3, wobei der erste Schwellenwert 15 Grad beträgt.

5. Verfahren nach Anspruch 3, wobei der zweite Schwellenwert 2 beträgt.

6. Verfahren nach Anspruch 1, wobei die disambiguierte Geschossflugbahn aus mehreren potentiellen Lösungen auswählt wird, wobei es sich bei der ausgewählten Lösung um die potentielle Lösung mit dem kleinsten Residualwert handelt.

7. Verfahren nach Ansprüchen 1 bis 6, wobei ein Konfidenzniveau für die Disambiguierung berechnet wird und das Konfidenzniveau auf einer Größe (L) der Antenne basiert.

8. Verfahren nach einem der Ansprüche 1 bis 7, wobei die disambiguierte Geschossflugbahn basierend auf einem Verhältnis der Residuen für zwei mehrdeutige Lösungen ausgewählt wird.

9. Verfahren nach einem der Ansprüche 1 bis 8, wobei die Laufzeitdifferenzen für Sensorpaare wie folgt bestimmt werden:

   Nominieren eines Sensors, der zuerst der Stoßwelle ausgesetzt ist, als Referenzsensor;
   Setzen einer ersten Sperre einer Zeitgeberschaltung, wenn eine Amplitude des Anfangsabschnitts des Nur-Stoßwellen-Signals an dem Referenzsensor einen Schwellenwert kreuzt, wobei die genannte erste Sperre Startzähler für jeden der anderen Sensoren aktiviert, wobei die Zähler in jedem der anderen Sensoren laufen, bis der entsprechende Sensor auf die Stoßwelle trifft;
   wenn einer der anderen Sensoren auf den Anfangsabschnitt des Nur-Stoßwellen-Signals trifft, Setzen einer zweiten Sperre für den entsprechenden anderen Sensor, die die Startzähler für diesen anderen Sensor anhält; und
   Aufzeichnen der Laufzeitdifferenzwerte für die anderen Sensoren in Bezug auf den Referenzsensor.

10. Verfahren nach einem der Ansprüche 1 bis 9, wobei eine Geschossflugbahn als falsch ausgeschlossen wird, wenn akustische Energie der gemessenen Stoßwellen-Wellenform weniger als einen vorherbestimmten Schwellenwert über einem vorherbestimmten Frequenzband aufweist.

11. Verfahren nach Anspruch 10, wobei das vorherbestimmte Frequenzband Frequenzen zwischen ungefähr 700 Hz und 10 kHz umfasst.

12. Verfahren nach einem der Ansprüche 1 bis 11, wobei eine Geschossflugbahn als falsch ausgeschlossen wird, wenn ein Zeitintervall, in dem eine gemessene Stoßwellen-Wellenform einen positiven Wert aufweist, kleiner ist als eine Mindestzeit oder größer als eine Maximalzeit.

**13.** Verfahren nach Anspruch 12, wobei die Mindestzeit ungefähr 70 $\mu$s beträgt und die Maximalzeit ungefähr 300 $\mu$s beträgt.

**14.** Verfahren nach einem der Ansprüche 1 bis 13, wobei die disambiguierte Geschossflugbahn einen kleineren Wert des Residuums aufweist als jede andere berechnete Geschossflugbahn.

**Revendications**

**1.** Procédé de désambiguïsation d'une trajectoire de projectile à partir de signaux d'ondes de choc uniquement, comprenant :

la mesure d'au moins une partie initiale des signaux d'ondes de choc uniquement (g(t)) au niveau de cinq capteurs acoustiques espacés (22-28) ou plus formant une antenne (20) ;
l'estimation d'une distribution des erreurs de synchronisation des capteurs acoustiques ;
la détermination, avec une résolution temporelle supérieure à l'écart type de la distribution des erreurs de synchronisation estimée, de Différences de Temps d'Arrivée, TDOA, de paires de capteurs à partir de la partie initiale mesurée des signaux d'ondes de choc uniquement ; et
la sélection (70-80) de la trajectoire de projectile désambiguïsée qui minimise le reste efficace, RMS, des TDOA des capteurs acoustiques, le reste ($\Delta\tau_{min}$) étant une fonction des différences entre les TDOA calculées ($\tau_{calc}$) et mesurées ($\tau_{meas}$) des paires de capteurs, en utilisant un algorithme génétique (GA) évolutif et un critère d'adéquation.

**2.** Procédé selon la revendication 1, dans lequel la distribution des erreurs de synchronisation est liée à des variations de gain, des variations d'échantillonnage et/ou des variations de position de capteur des capteurs d'antenne.

**3.** Procédé selon la revendication 1, dans lequel le critère d'adéquation comporte un angle d'azimut manqué calculé inférieur à un premier seuil ou un rapport des restes de deux solutions ambiguës supérieur à un second seuil.

**4.** Procédé selon la revendication 3, dans lequel le premier seuil est de 15 degrés.

**5.** Procédé selon la revendication 3, dans lequel le second seuil est 2.

**6.** Procédé selon la revendication 1, dans lequel la trajectoire de projectile désambiguïsée est sélectionnée parmi une pluralité de solutions possibles, la solution sélectionnée étant la solution potentielle ayant la plus petite valeur de reste.

**7.** Procédé selon les revendications 1 à 6, dans lequel un niveau de confiance de désambiguïsation est calculé, le niveau de confiance étant fonction d'une taille (L) de l'antenne.

**8.** Procédé selon l'une des revendications 1 à 7, dans lequel la trajectoire de projectile désambiguïsée est sélectionnée en fonction d'un rapport des restes de deux solutions ambiguës.

**9.** Procédé selon l'une des revendications 1 à 8, dans lequel les Différences de Temps d'Arrivée, TDOA, des paires de capteurs sont déterminées en
désignant comme capteur de référence le capteur qui rencontre le premier l'onde de choc ;
réglant un premier verrou d'un circuit de synchronisation quand une amplitude de la partie initiale du signal d'onde de choc uniquement au niveau du capteur de référence franchit une valeur de seuil, ledit premier verrou activant des compteurs de départ de chacun des autres capteurs, les compteurs dans chacun des autres capteurs fonctionnant jusqu'à ce que le capteur correspondant rencontre l'onde de choc ;
quand l'un des autres capteurs rencontre la partie initiale du signal d'onde de choc uniquement, réglant un second verrou pour l'autre capteur correspondant qui arrête les compteurs de départ de cet autre capteur ; et
enregistrant les valeurs TDOA des autres capteurs relativement au capteur de référence.

**10.** Procédé selon l'une des revendications 1 à 9, dans lequel une trajectoire de projectile est éliminée comme étant fausse si l'énergie acoustique de la forme d'onde de choc mesurée a une valeur inférieure à une valeur de seuil prédéterminée sur une bande de fréquences prédéterminée.

11. Procédé selon la revendication 10, dans lequel la bande de fréquences prédéterminée comprend des fréquences entre approximativement 700 Hz et 10 kHz.

12. Procédé selon l'une des revendications 1 à 11, dans lequel une trajectoire de projectile est éliminée comme étant fausse si un intervalle de temps durant lequel une forme d'onde de choc mesurée a une valeur positive est inférieur à un temps minimum ou supérieur à un temps maximum.

13. Procédé selon la revendication 12, dans lequel le temps minimum est approximativement 70 μs et le temps maximum est approximativement 300 μs.

14. Procédé selon l'une des revendications 1 à 13, dans lequel la trajectoire de projectile désambiguïsée a une valeur de reste inférieure à celles de toute les autres trajectoires de projectile calculées.

FIG. 1

FIG. 2

EP 2 042 883 B1

Shooter
Position

False Shooter
Position

β⁻

β

180-2θ-
2β

False Shot
Trajectory

Shot
Trajectory

θ

θ

Microphone
Position

FIG. 3

FIG. 4

FIG. 5

FIG. 6

FIG. 7

FIG. 8

Projectile
TRAJECTORY

SHOCK-WAVE FRONT

Point where sound
is radiated to sensor

$\pi/2-\theta$

R

$\theta$

$\alpha$

S

$\theta$

A

$\beta$

j$^{th}$ Sensor
$(S_{xj}, S_{yj}, S_{zj})$

10

Shooter
$(P_X, P_Y, P_Z)$

D

P

$S_j$

$(0, 0, 0)$

FIG. 9

EP 2 042 883 B1

FIG. 10

FIG. 11

**EP 2 042 883 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5241518 A
- US 5930202 A
- US 6178141 B